# EUROPÄISCHE PATENTANMELDUNG

(11) **EP 1 276 195 A2**
(43) Veröffentlichungstag der Anmeldung: **15.01.2003**
(21) Anmeldenummer: 02014691.6
(22) Anmeldetag: 03.07.2002
(51) Int. Cl.: H02G 3/04, H02G 3/12

(54) **Versorgungseinheit**

(30) Priorität: 11.07.2001 DE 20111601 U
(71) Anmelder: TRILUX-LENZE GmbH & Co. KG, D-59759 Arnsberg (DE)
(72) Erfinder: Lehrich, Karl, 59757 Arnsberg (DE)
(74) Vertreter: Patentanwälte Lippert, Stachow, Schmidt & Partner

(57) **Zusammenfassung**

Die Erfindung betrifft eine Versorgungseinheit, insbesondere für den Einsatz im Krankenhausbereich, mit einem an einem Bauträger befestigbarem, kanalartigen und sich längserstreckendem Profil zur Aufnahme und Führung von Versorgungsleitungen und mindestens einem in diesem Profil vorgesehenen Anschlusselement. Um den Herstellungsaufwand zu reduzieren wird vorgeschlagen, Anschlagsleisten an einer Abdeckplatte vorzusehen, mit welcher der Kanal verschließ- bzw. abdeckbar ist (Fig. 4).

## Beschreibung

Die Erfindung betrifft eine Versorgungseinheit, insbesondere für den Einsatz im Krankenhausbereich, mit einem an einem Bauträger befestigbarem, kanalartigen und sich längserstreckendem Profil zur Aufnahme und Führung von Versorgungsleitungen und mindestens einem in diesem Profil vorgesehenen Anschlusselement.

Eine derartige Versorgungseinheit ist beispielsweise aus der europäischen Patentschrift 0 551 600 der Anmelderin bekannt. Üblicherweise wird bei einer derartigen Versorgungseinheit die aus dem Profil gebildete Gehäuseeinheit an einer Wand befestigt und nimmt zwei oder mehr übereinander angeordnete, unmittelbar gegeneinander anstoßende Profile auf. Jedes Profil hat im wesentlichen einen U-förmigen Querschnitt mit einem an dem Untergrund befestigbaren, in Längserstreckungsrichtung verlaufenden Grundsteg und zwei sich im wesentlichen quer zum Grundsteg, in Einbaulage horizontal von der Wand abstehende obere und untere Querstege. Zwischen den Querstegen ist eine nach vorne - von der Wand fortgerichtete - Öffnung vorgesehen. Die Öffnung kann durch eine oder mehrere Abdeckungen verschlossen werden, wobei die Abdeckungen in der Regel eine geringere Länge aufweisen als das Kanalgehäuse. In der Abdeckung sind beim Stand der Technik Löcher vorgesehen, in welche die Anschlusseinreichungen für die Stromversorgung, elektrische Signalverbindungen, Messleitungen, Druckluft, Vakuum, Gas oder dergleichen rückseitig hinter der Abdeckungsplatte einsetzbar sind. Diese Anschlusseinrichtungen sind mit den in der Versorgungseinheit geführten Leitungen verbunden.

Eine derartige Versorgungseinheit, also die Profile und die Abdeckungen bestehen üblicherweise aus stranggepreßten oder extrudierten Profilen, die vorzugsweise aus Stahl oder Aluminium gefertigt sind und über ihre gesamte Länge einen konstanten Querschnitt mit unterschiedlichen Wandstärken aufweisen. Auf diese Weise können an der Versorgungseinheit auch T-förmige Geräteschienen angeformt sein, an denen schwere Geräteträger für medizinische Aggregate einhängbar sind. Diese medizinischen Aggregate können durchaus hohe Gewichte erzielen, z.B. 100 Kg.

Die Öffnungen für die Anschlusselemente müssen in diese spanabhebend eingebracht werden, üblicherweise mittels Stanzen oder Fräsen. Damit ist eine zeit- und kostenintensive Spezialbearbeitung erforderlich.

Es ist Aufgabe der vorliegenden Erfindung den Herstellungsaufwand für eine Versorgungseinheit zu reduzieren, insbesondere den Aufwand für die Fertigung der Abdeckplatte zur Aufnahme der Anschlusselemente.

Erfindungsgemäß wird diese Aufgabe gelöst durch Vorsehen längserstreckenden Anschlagsleisten - jeweils einer oberen und einer unteren - an der Versorgungseinheit, an denen das Anschlusselement in Längserstreckungsrichtung der Versorgungseinheit beliebig positionierbar ist.

Die Anschlussleisten können entweder unmittelbar an dem Profil bzw. dem Gehäuse der Versorgungseinheit oder an der Abdeckplatte vorgesehen sein. Die vorzugsweise parallel zueinander verlaufenden Anschlagsleisten dienen als Auf- und Gegenlager für die Anschlusselemente, die hinter die Anschlagsleisten einrastbar sind. Die Rastverbindung kann so ausgebildet sein, dass die eingesetzten Anschlusselemente im eingesetzten Zustand noch längs verschieblich sind, oder dass diese nach dem Einsetzen axial fixiert sind. Vorzugsweise sind die Anschlusselemente jedoch nicht mehr werkzeuglos von der Anschlussleiste entfernbar, da insbesondere spannungsführende Teile wie Steckdosen berührungssicher sein müssen. Die einzelnen Anschlusselemente können bedarfsgerecht entweder unmittelbar nebeneinander oder unter Einschaltung von dazwischen liegenden Blindelementen kombiniert werden. Auch die Blindelemente und die mit den Anschlussleisten versehene Abdeckplatte sind vorzugsweise aus stranggepressten Aluminiumprofilen oder Stahlprofilen gefertigt.

Zur Gewährleistung einer ausreichenden Längssteifigkeit und eines Parallellaufs der Anschlagsleisten können auf deren Rückseiten im Inneren der Versorgungseinheit ein oder mehrere Abstandsbügel vorgesehen sein, welche kraft- und/oder formschlüssig mit der Versorgungseinheit verbindbar sind. Vorzugsweise weist die Abdeckplatte oder die Versorgungseinheit innenseitig sich im Bereich der Anschlussleiste erstreckende Nuten auf, in welche jeweils ein oberer und unterer an dem Abstandsbügel vorgesehener Kulissenstein formschlüssig eingreift.

Da durch die erfindungsgemäße Ausgestaltung keine spanabhebende Bearbeitung der Versorgungseinheit oder der Abedeckplatte erforderlich ist, ist die erfindungsgemäße Versorgungseinheit mit einem Kostenvorteil von bis zu 50% im Verhältnis zu dem Stand der Technik verbunden. Weitere Arbeitsschritte zum Vorsehen der Löcher in der Abdeckplatte sind nicht erforderlich. Eine existierende Versorgungseinheit ist einfach umgestaltbar durch Versetzen der Anschlusselemente und eventuell Vorsehen von Blindelementen, welches die dazwischen liegenden Öffnungen der Kanalrinne zwischen den Anschlagsleisten abdeckt. Die Versorgungseinheit ist auch einfach nachrüstbar, da diese nicht durch die vorgesehen Löcher aus dem Stand der Technik determiniert ist. Dieses senkt den Planungsaufwand für die Konfektionierung der Versorgungseinheiten, da ein konkretes Festlegen auf die Positionen der Ausnehmungen für die Anschlusselemente in der Versorgungseinheit in der Frühphase der Planung nicht mehr erforderlich ist. Schließlich sinkt auch der Lagerhaltungsaufwand für entsprechend ausgebildete Versorgungseinheiten oder Abdeckplatten.

Die Erfindung ist anhand eines bevorzugten Ausführungsbeispiels in den Figuren veranschaulicht und im folgenden detailliert beschrieben. Es zeigen:

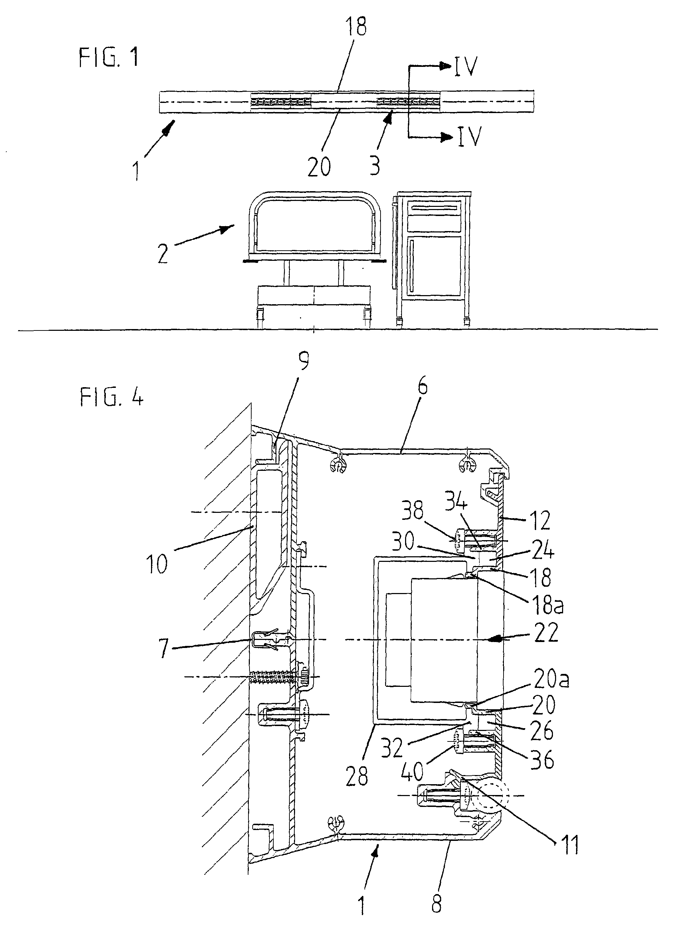

- Fig. 1: eine Ansicht einer erfindungsgemässen Versorgungseinheit, die über einem Krankenbett angeordnet ist,
- Fig. 2: eine Frontansicht ein aus dem Stand der Tecknik bekannten Abdeckplatte,
- Fig. 3: ein seitliches Schnittbild der Abdeckplatte entlang der Linie III-III gemäß Fig. 2,
- Fig. 4: einen Querschnitt durch die erfindungsgemäße Versorgungseinheit entlang der Linie IV-IV gemäß Fig. 1,
- Fig. 5: einen Querschnitt durch die erfindungsgemäß ausgebildete Abdeckplatte,
- Fig. 6: eine Draufsicht der Abdeckplatte gemäß Fig. 5.

Gemäß den Zeichnungen besteht die Versorgungseinheit, die in ihrer Gesamtheit mit 1 gekennzeichnet ist aus einem langgestreckten Profilkanal, der an einer Wand, beispielsweise oberhalb eines Bettes 2 in einem Krankenhaus befestigt ist. Seitlich versetzt von der theoretischen Bettenmitte sind in der Versorgungseinheit mehrere Anschlusselemente 3 vorgesehen.

Diese können beispielsweise als Steckdosen, Gasanschlüsse, Telekommunikationsanschlüsse ausgebildet sein.

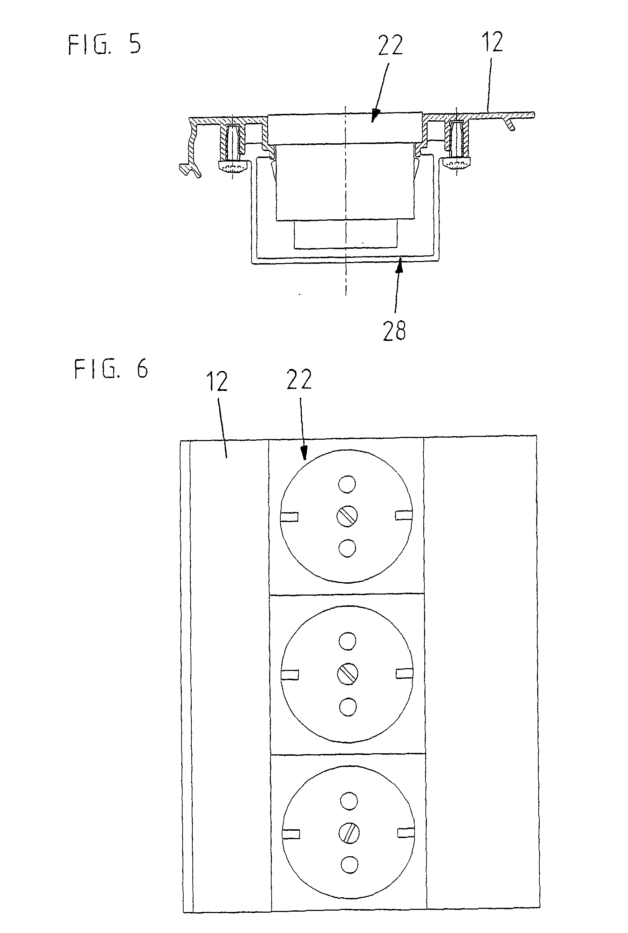

Die Figur 4 zeigt die erfindungsgemäße Versorgungseinheit 1 im Querschnitt. Demnach besteht die Versorgungseinheit aus einem oberen Profilelement 6, das im wesentlichen als Winkelprofil ausgebildet ist, und einem mit dem oberen Profilelementen 6 über eine Klammer 7 verbindbaren unteren Profilelement 8, das spiegelsymmetrisch zum oberen Profilelement 6 ausgebildet ist. Das obere Profilelement 6 ist über einen in bekannterweise angesetzten Fixierungssteg 9 hinter einer an der Wand verschraubten Aufhängeleiste 10 formschlüssig eingehängt. Der genaue Aufbau der Versorgungseinheit ist bekannt und nicht Gegenstand dieser Erfindung.

Die Versorgungseinheit ist in Einbaulage vorderseitig durch eine Abdeckplatte 12 verschliessbar, die ebenfalls als Strangpressprofil ausgebildet ist. Die Abdeckplatte 12 ist in bekannter Weise form- und/oder kraftschlüssig mit der Versorgungseinheit 1 verbindbar und verschliesst diese in Einbaulage. Vorzugsweise ist in der Fig. 4 dargestellten unteren Ende ein Zentriereingriff 11 ausgebildet, das über eine in das untere Profilelement 8 eindrehbare Schraube 13 lösbar mit der Versorgungseinheit 1 verbindbar ist.

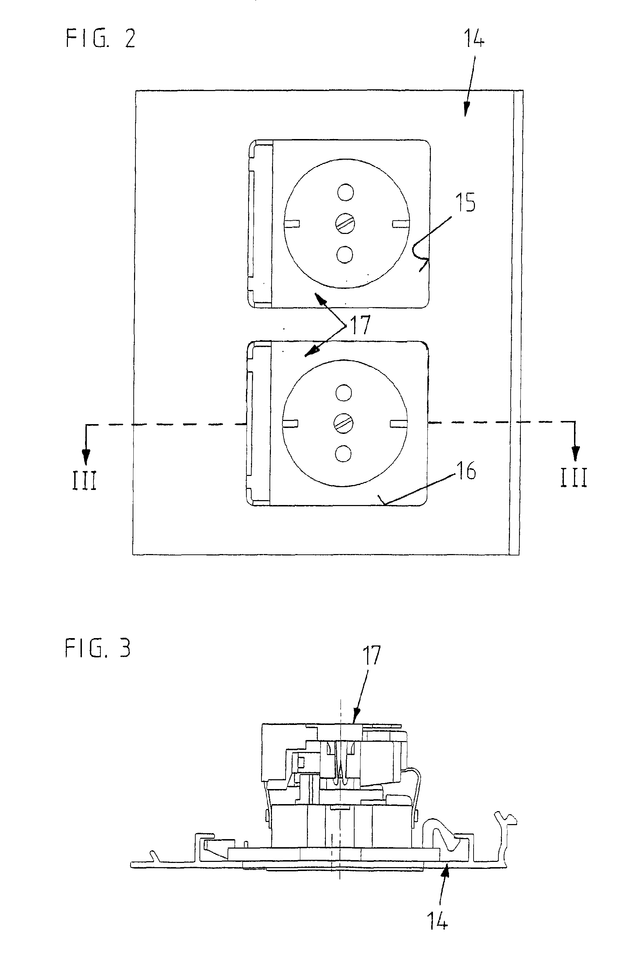

In den Figuren 2 und 3 ist eine aus dem Stand der Technik bekannte Abdeckplatte 14 dargestellt. Diese, ebenfalls als Profilelement ausgebildete Abdeckplatte 14 ist mit zwei ausgefrästen Öffnungen 15 und 16 versehen, durch die rückseitig in diese eingesetzte, als Steckdosen 17 ausgebildete Anschlusselemente in Einbaulage einrastbar sind. Die Öffnungen müssen im frühen Planungsstadium für eine Versorgungseinheit berücksichtigt werden und spanabhebend in der Abdeckplatte 14 vorgesehen werden. Dieses ist zeitaufwendig und kostenintensiv.

Demgegenüber ist die erfindungsgemässe Abdeckplatte mit einer oberen Anschlagsleiste 18 und einer unter Anschlagsleiste 20 versehen, die sich jeweils in Längserstreckungsrichtung über einen längeren Bereich von 1 bis 2 Metern in der Versorgungseinheit 1 erstrecken. Die obere Anschlagsleiste 18 und untere Anschlagsleiste 20 erstrecken sich parallel zueinander und sind jeweils mit einen zur Mitte der Versorgungseinheit ragenden Absatz 18a und 20a versehen, gegen die der Rahmen des Anschlusselements 22 anlegbar ist. Das Anschlusselement 22 ist über Federelemente rückseitig mit der Abdeckplatte 12 verbunden.

Die Abdeckplatte 12 weist in Einbaulage rückseitig eine obere Profilnut 24 und untere Profilnut 26 auf. Die Profilnuten 24 und 26 sind vorwiegend als U-Profil mit ausragenden Absätzen 18a und 20a ausgebildet, wobei diese Absätze gleichzeitig die Absätze der oberen Anschlagsleiste 18 und unteren Anschlagsleiste 20 bilden.

In die Profilnuten 24 und 26 ist ein Abstandsbügel 28 formschlüssig einsetzbar, der im Wesentlichen eine U-förmige Gestalt aufweist und so dimensoniert ist, dass ausreichend Platz für das Einsetzen verschiedener Anschlusselemente vorliegt. Die in Einbaulage vorderseitigen Enden des Abstandsbügels 28 sind als Kulissensteine 30, 32 ausgebildet, die in den Profilnuten 24, 26 sitzen. Die Kulissensteine 30 und 32 sind ein Negativprofil der Profilnuten 24 und 26, so dass diese formschlüssig in die Profilnuten 24 und 26 einsitzen. Daneben weisen die Kulissensteine 30, 32 einen jeweils nach aussen ragenden Absatz auf, der zwischen einem an der Abdeckplatte 12 rückseitig angeformten Klemmsteg 34 und 36 mittels Schrauben 38 und 40 lösbar einklemmbar ist.

Von den Abstandsbügeln können eine oder mehrere entlag der Längserstreckungsrichtung der Anschlagsleisten 18 und 20 vorgesehen sein, um diese zueinander zu beabstanden und die Masshaltigkeit sicherzustellen. Die Abstandsbügel sind üblicherweise nur etwa zwei cm breit und können beliebig entlang der Längserstreckungsrichtung der Anschlagsleisten angeordnet werden, sodass sie auch ausserhalb des Bereichs positionierbar sind, an denen die Anschlusselemente gelegen sind.

In der Figur 5 ist die Montageeinheit, bestehend aus Abdeckplatte 12, einer Steckdose 22 und einen über mehrere Abstandsbügel 28, die an der Rückseite der Abdeckplatte 12 festgeschraubt sind, nochmals in der Seitenansicht dargestellt.

Zusammenfassend betrifft die Erfindung eine Versorgungseinheit, insbesondere für den Einsatz im Krankenhausbereich, mit einem an einem Bauträger befestigbaren, kanalartigen und sich längserstreckenden Profil, zur Aufnahme und Führung zur Versorgungsleitungen und mindestens einer in dieser vorgesehenen Anschlusselement, das mit den Versorgungsleitungen verbindbar ist. Zur Erhöhung der Variabilität und Vereinfachung der Fertigung wird erfindungsgemäss vorgeschlagen, dass die Versorgungseinheit längserstreckende Anschlagsleisten aufweist, an denen das Anschlusselement in Längserstreckungsrichtung beliebig posionierbar ist.

### Bezugszeichenliste

- 1: Versorgungseinheit
- 2: Bett
- 3: Anschlusselement
- 6: Profilelement
- 7: Klammer
- 8: Profilelement
- 9: Fixierungssteg
- 10: Aufhängeleiste
- 11: Zentriereingriff
- 12: Abdeckplatte
- 13: Schraube
- 14: Abdeckplatte
- 15: Öffnung
- 16: Öffnung
- 17: Steckdose
- 18: obere Anschlagsleiste
- 18a: Absatz
- 20: untere Anschlagsleiste
- 20a: Absatz
- 22: Anschlusselement
- 24: obere Profilnut
- 26: untere Profilnut
- 28: Abstandsbügel
- 30: Kulissenstein
- 32: Kulissenstein
- 34: Klemmsteg
- 36: Klemmsteg
- 38: Schraube
- 40: Schraube

## Patentansprüche

1. Versorgungseinheit (1), insbesondere für den Einsatz im Krankenhausbereich, mit einem an einem Bauträger befestigbarem, kanalartigen und sich längserstreckendem Profil (8) zur Aufnahme und Führung von Versorgungsleitungen und mindestens einem in diesem vorgesehenen Anschlusselement (3), wobei das Profil (8) durch einen Profildeckel (6) verschließbar ist, **dadurch** gekennzeichn e t, dass sich längserstreckende Anschlagsleisten (18, 20) an dem Profildeckel (6) ausgebildet sind, an denen das Anschlusselement (3) in Längserstreckungsrichtung beliebig positionierbar ist.

2. Versorgungseinheit (1) nach einem der vorhergehenden Ansprüche, **dadurch gekennzeichnet, dass** die Anschlagsleisten (18, 20) durch mindestens einen Abstandbügel (28) voneinander beabstandet sind.

3. Versorgungseinheit (1) nach einem der vorhergehenden Ansprüche, **dadurch gekennzeichnet, dass** die Anschlagsleisten (18, 20) in Einbaulage rückseitig eine Nut aufweisen, in die ein an dem Abstandsbügel (28) ausgebildeter Kulissenstein (30, 32) formschlüssig eingreift.

4. Versorgungseinheit (1) nach einem der vorhergehenden Ansprüche, **dadurch gekennzeichnet, dass** das Anschlusselement (3) axial verschieblich zwischen den Anschlagsleisten (18, 20) befestigbar ist.

5. Versorgungseinheit (1) nach einem der vorhergehenden Ansprüche, **dadurch gekennzeichnet, dass** das Anschlusselement (3) nur mit einem Werkzeug lösbar ist.
